# EUROPÄISCHE PATENTANMELDUNG

(11) **EP 2 256 396 A1**
(43) Veröffentlichungstag der Anmeldung: **01.12.2010**
(21) Anmeldenummer: 10162472.4
(22) Anmeldetag: 10.05.2010
(51) Int. Cl.: F16L 55/28, B01J 19/12, B29C 63/00

(54) **Vorrichtung zum Aushärten von Kunststofflinern**

(30) Priorität: 18.05.2009 DE 102009025829
(71) Anmelder: Reutemann, Thomas, Heisinger Strasse 45 87437 Kempten (DE)
(72) Erfinder: Reutemann, Thomas, Heisinger Strasse 45 87437 Kempten (DE)
(74) Vertreter: Hutzelmann, Gerhard

(57) **Zusammenfassung**

Vorrichtung (1) zum Aushärten von Kunststofflinern zur Rohr- und Kanalsanierung mit wenigstens einer UV-Lichtquelle (3), wobei Rollen (5) zur Lagerung der Vorrichtung (1) im Rohr vorgesehen sind und wobei eine Schub- und/oder Zugvorrichtung vorgesehen ist, mit der die Vorrichtung (1) durch das zu sanierende Kanalrohr geschoben bzw. gezogen werden kann, wobei mehrere Aufnahmen (7) vorgesehen sind, die unterschiedliche Rollen (5) aufzunehmen vermögen.

## Beschreibung

Die Erfindung bezieht sich auf eine Vorrichtung zum Aushärten von Kunststofflinern zur Rohr- und Kanalsanierung mit wenigstens einer UV-Lichtquelle, wobei Rollen zur Lagerung der Vorrichtung im Rohr vorgesehen sind und wobei eine Schub- und/oder Zugvorrichtung vorgesehen ist, mit der die Vorrichtung durch das zu sanierende Kanalrohr geschoben bzw. gezogen werden kann.

Es sind verschiedene derartige Vorrichtungen bekannt.

Bei allen diesen Vorrichtungen besteht aber das Problem, daß diese nur immer für einen Rohrdurchmesser oder eine Rohrform einsetzbar sind.

Es ist daher eine Vielzahl verschiedener Vorrichtungen notwendig, um die in der Praxis auftretenden Rohrdurchmesser, die meist zwischen 80 und 1000 Millimeter betragen, bearbeiten zu können. Hinzu kommen noch die sogenannten Ei-Profile, die eine größere Höhe als Breite aufweisen.

Aufgabe der Erfindung ist es daher, eine Vorrichtung vorzuschlagen, die universell bei einer Vielzahl von unterschiedlichen Rohrdurchmessern und auch bei unterschiedlichen Rohrformen einsetzbar ist.

Diese Aufgabe wird erfindungsgemäß dadurch gelöst, daß mehrere Aufnahmen vorgesehen sind, die unterschiedliche Rollen aufzunehmen vermögen.

Hierdurch kann die Vorrichtung durch Einsetzen verschiedener Rollensätze an unterschiedliche Rohrdurchmesser und Rohrformen angepasst werden.

Dabei hat es sich auch als sehr vorteilhaft erwiesen, wenn die Rollen an Armen angeordnet sind, die in die Aufnahmen einsetzbar sind.

Damit wird eine sehr große Flexibilität der Einsatzmöglichkeiten bei einer trotzdem hohen Stabilität der Lagerung der Rollen erzielt.

Eine erfindungsgemäß ebenfalls sehr vorteilhafte Ausgestaltung liegt auch dann vor, wenn die Arme in ihrer Länge verstellbar ausgebildet sind.

Dadurch können die Arme an unterschiedliche Rohrdurchmesser und Rohrformen angepasst werden.

Es hat sich auch als sehr vorteilhaft erwiesen, wenn die Arme einen Knick bzw. eine Knickstelle aufweisen.

Hierdurch kann der Arm auch an verschiedene Rohrdurchmesser angepasst werden.

Eine weitere sehr vorteilhafte Ausgestaltung der Erfindung liegt auch vor, wenn die Arme gebogen ausgebildet sind.

Hierdurch kann eine verbesserte Zentrierung und Lagerung der Vorrichtung im Rohr sichergestellt werden.

Es hat sich auch als sehr vorteilhaft erwiesen, wenn die Arme federnd und/oder klappbar ausgebildet sind.

Damit kann der Arm bei zu großer Belastung ausweichen, wodurch Beschädigungen des Liners verhindert werden. Wenn die Arme wegklappbar sind, können diese zum Transport der Vorrichtung eingeklappt werden.

Erfindungsgemäß hat es sich auch als sehr vorteilhaft erwiesen, wenn die Vorrichtung einen wenigstens annähernd zylindrischen Körper aufweist und die Aufnahmen wenigstens annähernd gleichmäßig über den Umfang verteilt angeordnet sind.

Damit können die Räder in nahezu beliebiger Ausrichtung angebracht werden.

Eine weitere vorteilhafte Fortbildung der Erfindung liegt auch vor, wenn zu jeder Aufnahme eine Rasteinrichtung vorgesehen ist, welche die Arme zu sichern vermag.

Dadurch lassen sich die Arme einfach und schnell einsetzen und auch wieder entfernen.

Dabei hat es sich auch als sehr vorteilhaft erwiesen, wenn die Aufnahmen zweiteilig ausgebildet sind und einen Befestigungsteil und einen Führungsteil aufweisen.

Damit sind die Arme stabil und sicher gelagert. Auftretende Kräfte werden aufgenommen.

Sehr vorteilhaft ist es erfindungsgemäß auch, wenn die Rasteinrichtung als Rastbolzen oder dergleichen ausgebildet ist.

Mit einem Rastbolzen lassen sich die Arme sicher und schnell einrasten.

Eine weitere sehr vorteilhafte Ausgestaltung der Erfindung liegt auch vor, wenn die Arme einen kreisförmigen, ovalen, eckigen, rechteckigen oder dergleichen Querschnitt aufweisen.

Durch eine derartige Ausgestaltung lässt sich auch eine Verdrehsicherung und/oder eine Sicherung gegenüber ein verkehrtes Einstecken realisieren.

Es hat sich gemäß einer Weiterbildung der Erfindung auch als äußerst vorteilhaft erwiesen, wenn mehrere Lichtquellen miteinander koppelbar ausgebildet sind.

Damit lässt sich die Vorrichtung an unterschiedliche Liner und Rohre und den damit unterschiedlichen UV-Lichtbedarf anpassen.

Dabei hat es sich als sehr vorteilhaft erwiesen, wenn zur Koppelung der Lichtquellen Verbindungsstücke vorgesehen sind, die wenigstens teilweise flexibel ausgebildet sind.

Dadurch lassen sich aneinander gekoppelte Lichtquellen auch durch gebogene Rohre schieben bzw. ziehen.

Eine weitere sehr vorteilhafte Ausgestaltung der Erfindung liegt auch vor, wenn die Lichtquellen auch Beleuchtungseinrichtungen im optischen Bereich, Kameras, Lagesensoren, Temperatursensoren und/oder dergleichen aufweisen.

Mit diesen zusätzlichen Einrichtungen lässt sich der UV-Aushärtevorgang überwachen und kontrollieren.

Dabei hat es sich auch als sehr vorteilhaft erwiesen, wenn Module vorgesehen sind, welche den UV-Lichtquellen ähnlich aufgebaut sind und Beleuchtungseinrichtungen im optischen Bereich, Kameras, Lagesensoren, Temperatursensoren und/oder dergleichen aufweisen.

Damit kann eine Kette aus Vorrichtungen nochmals universeller zusammengestellt werden, die aber trotzdem schnell zusammengekoppelt werden kann.

Eine weitere sehr vorteilhafte Ausgestaltung liegt auch vor, wenn die UV-Lichtquellen schalt- und/oder regelbar sind.

Ebenfalls sehr vorteilhaft ist es, wenn die UV-Lichtquellen getrennt schalt- und/oder regelbar sind.

Dadurch lässt sich die Strahlungsleistung auf einfache Art und Weise an die Gegebenheiten des Liners und des Rohres anpassen.

Im folgenden wird die Erfindung anhand eines Ausführungsbeispiels veranschaulicht.

Dabei zeigen:
- Fig. 1: ein Schaubild einer erfindungsgemäßen Vorrichtung mit einem Radsatz für runde Rohre mit DN600,
- Fig. 2: eine frontale Ansicht der Vorrichtung mit einem Radsatz für ein Rohr mit Ei-Profil 750/500

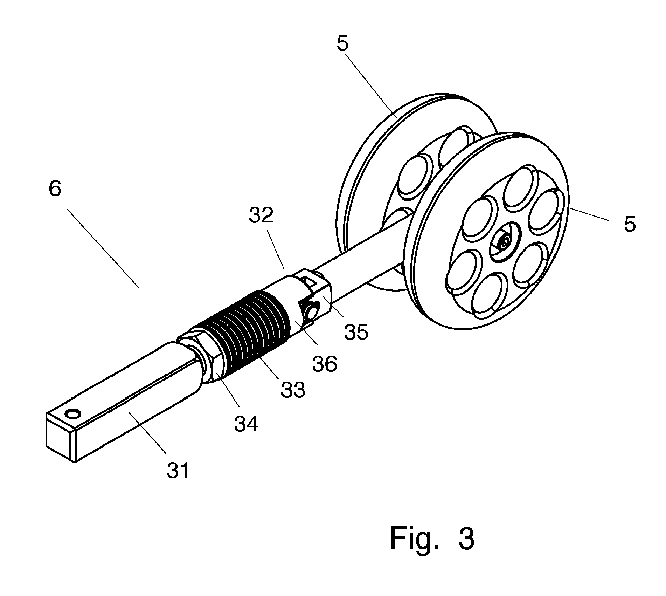

- Fig. 3: ein Schaubild eines Rades mit Arm.

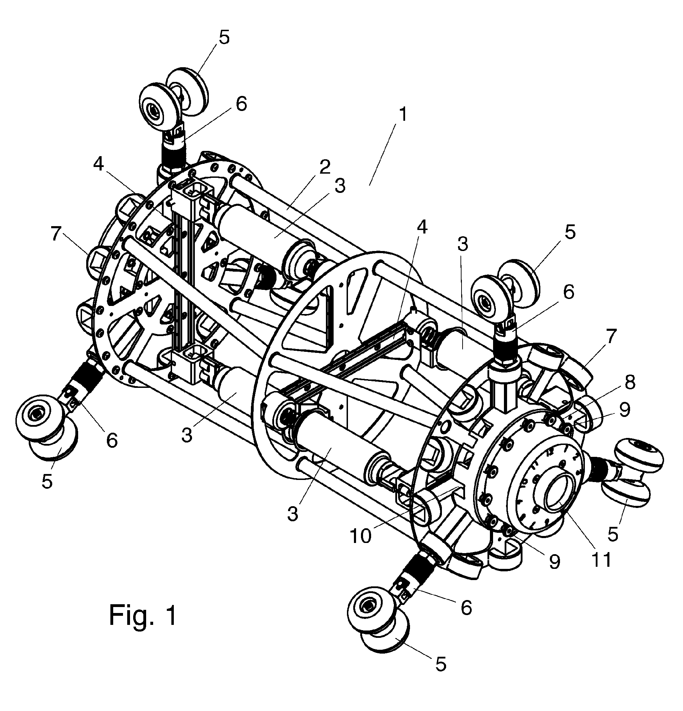

Mit 1 ist in Fig. 1 eine Vorrichtung zum Aushärten von Kunststofflinern zur Reparatur und Sanierung von Rohrleitungen bezeichnet.

Diese Vorrichtung 1 ist aus einem vergleichsweise filigranen Körper 2 aufgebaut, in dem mehrere UV-Lampen 3 angeordnet sind. Der Körper 2 weist einen im wesentlichen zylinderförmigen Umriß auf. Die UV-Lampen 3 lassen sich über eine Verstelleinrichtung 4 in Ihrer Position im Körper 2 verändern, aber auch einfach entfernen oder austauschen.

An den Stirnseiten des Körpers 2 sind Räder 5 vorgesehen, die über einen Arm 6 mit dem Körper 2 verbunden sind. Der Arm 6 ist dabei durch eine Halterung 7 hindurch gesteckt und in einer Rasteinrichtung 8 eingerastet und damit gegen versehentliches Herausrutschen gesichert. Die Rasteinrichtung 8 weist dabei eine Mehrzahl von Rastbolzen 9 auf, die gleichmäßig über den Umfang verteilt sind. Im dargestellten Ausführungsbeispiel sind zwölf Rastbolzen 9 vorgesehen. Jedem Rastbolzen 9 ist eine Einstecköffnung 10 zugeordnet, in die der Arm 6 eingesteckt werden kann.

Jeder Paarung aus Einstecköffnung 10 und Rastbolzen 9 ist eine Halterung 7 zugeordnet.

Andere Anzahlen und Teilungen in der Anordnung der Rastbolzen 9, Einstecköffnungen 10 und Halterungen 7 sind denkbar.

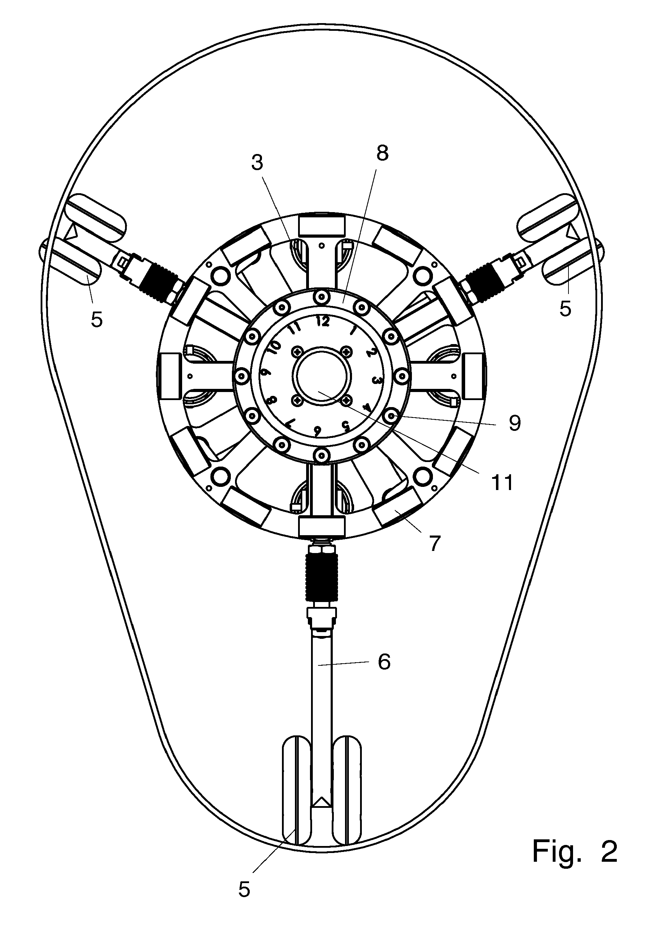

Meistens werden pro Stirnseite drei Räder 5 vorgesehen. Je nach Rohrdurchmesser können die Arme 6 der Räder unterschiedliche Längen aufweisen. Zum Beispiel bei einem Rohr mit Ei-Profil, wie dies in Fig. 2 dargestellt ist, kann auch ein Arm 6 der drei Räder 5 länger ausgeführt sein und so für eine optimale zentrierung der Vorrichtung im auszuhärtenden Liner sichergestellt werden. Auch bei runden Rohrquerschnitten ist eine außermittige Zentrierung durch unterschiedlich lange Arme 6 denkbar.

Hierzu können die Arme 6 auch längenverstellbar ausgebildet sein.

Die Arme 6 können beliebig in die Halterungen 7 eingesteckt werden, so daß dadurch auch die Lage der Vorrichtung im Rohr vorgegeben werden kann. Eine Verdrehung mehrerer hintereinander gekoppelter Vorrichtungen 1 gegeneinander ist dadurch denkbar. Durch eine solche Verdrehung ist eine verbesserte Ausleuchtung des auszuhärtenden Liners gegeben. Abschattungen durch den Körper 2 der Vorrichtung 1 werden so über mehrere Vorrichtungen 1 hinweg ausgeglichen.

Zur Kopplung mehrerer Vorrichtungen 1 hintereinander ist eine Kupplung 11 vorgesehen, die nicht nur eine mechanische Kopplung, sondern auch eine elektrische Verbindung ermöglicht. An solch einer Kupplung 11 kann auch ein Verbindungskabel zu einer nicht dargestellten Steuereinrichtung angeschlossen werden und/oder ein Zug- oder Schubkabel.

Für die Kopplung mehrerer Vorrichtungen 1 können bewegliche Verbindungsstücke vorgesehen sein, die entweder Gelenke aufweisen oder aber insgesamt flexibel ausgebildet sind.

In die Halterungen 7 können auch optische Beleuchtungseinrichtungen, Kameras, Temperatursensoren, Lagesensoren oder dergleichen eingesetzt werden, um den Aushärtevorgang zu steuern und zu überwachen. Es ist auch denkbar, daß diese in separaten Aufnahmen an den Stirnseiten des Körpers 2 angebracht werden, oder aber im Körper 2 zusätzlich oder im Austausch gegen UV-Lampen 3 angebracht sind.

Die Arme 6 sind im dargestellten Ausführungsbeispiel mit einem quadratischen Abschnitt 31 ausgerüstet, der in die Halterungen 7 und in die Rasteinrichtung 8 eingesteckt wird. Durch diesen quadratischen Abschnitt 31 ist eine wirkungsvolle Verdrehsicherung gegeben.

Zwischen dem Abschnitt 31 und dem Rad 5 ist eine Knickstelle 32 vorgesehen, die mit einer einstellbaren Feder 33 belastet ist. Die Vorspannung der Feder 33 ist durch eine Einstellmutter 34 einstellbar.

Die Knickstelle 32 ist dabei zweiteilig aufgebaut und besteht aus einem Knickgelenk 35, welches durch eine Hülse 36 gestützt wird.

Die Feder 33 wirkt auf die Hülse 36.

Durch die Hülse 36 wird ein spontanes wegklappen der Räder 5 an der Knickstelle 32 vermieden. In Abhängigkeit von der Vorspannung der Feder 33 wird eine Kraft vorgegeben, ab der die Räder 5 über die Knickstelle 32 wegklappen. Wenn nun durch ein Hindernis im Kunststoffliner oder im auszukleidenden Rohr ein Rad 5 blockiert wird und dadurch die Gefahr besteht den Kunststoffliner zu beschädigen, klappt das Rad 5 entgegen der Bewegungsrichtung der Vorrichtung 1 im Rohr weg und richtet sich wieder auf, sobald das Hindernis überwunden ist. Die Kraft, ab der das Rad 5 wegklappt wird durch die Federvorspannung bestimmt.

Um das Wiederaufrichten des Rades zu gewährleisten ist das Knickgelenk 35 ballig ausgebildet und die Hülse 36 weist eine entsprechende Ausgestaltung auf. Andere Ausgestaltungen sind denkbar.

Die UV-Lichtquellen 3 sind gemeinsam oder getrennt voneinander regelbar, wodurch der Aushärtevorgang entsprechend er Überwachung gesteuert werden kann.

Es können auch je nach zu bearbeitendem Rohrdurchmesser und Rohrform UV-Lichtquellen 3 entfernen oder hinzufügen. Zudem ist es denkbar, daß zum Beispiel mit Adaptern wenigstens ein Teil der UV-Lichtquellen 3 außerhalb der Vorrichtung 1 gelagert werden, so daß sich zum Beispiel bei einem Rohr mit Ei-Profil auch eine gleichmässige Ausleuchtung ergibt.

## Patentansprüche

1. Vorrichtung zum Aushärten von Kunststofflinern zur Rohr- und Kanalsanierung mit wenigstens einer UV-Lichtquelle, wobei Rollen zur Lagerung der Vorrichtung im Rohr vorgesehen sind und wobei eine Schub- und/oder Zugvorrichtung vorgesehen ist, mit der die Vorrichtung durch das zu sanierende Kanalrohr geschoben bzw. gezogen werden kann, **dadurch gekennzeichnet, daß** mehrere Aufnahmen vorgesehen sind, die unterschiedliche Rollen aufzunehmen vermögen.

2. Vorrichtung nach Anspruch 1, **dadurch gekennzeichnet, daß** die Rollen an Armen angeordnet sind, die in die Aufnahmen einsetzbar sind.

3. Vorrichtung nach Anspruch 1 oder 2, **dadurch gekennzeichnet, daß** die Arme in ihrer Länge verstellbar ausgebildet sind.

4. Vorrichtung nach Anspruch 1, 2 oder 3, **dadurch gekennzeichnet, daß** die Arme einen Knick bzw. eine Knickstelle aufweisen.

5. Vorrichtung nach einem der vorangehenden Ansprüche, **dadurch gekennzeichnet, daß** die Arme gebogen ausgebildet sind.

6. Vorrichtung nach einem der vorangehenden Ansprüche, **dadurch gekennzeichnet, daß** die Arme federnd und/oder klappbar ausgebildet sind.

7. Vorrichtung nach einem der vorangehenden Ansprüche, **dadurch gekennzeichnet, daß** die Vorrichtung einen wenigstens annähernd zylindrischen Körper aufweist und die Aufnahmen wenigstens annähernd gleichmäßig über den Umfang verteilt angeordnet sind.

8. Vorrichtung nach einem der vorangehenden Ansprüche, **dadurch gekennzeichnet, daß** zu jeder Aufnahme eine Rasteinrichtung vorgesehen ist, welche die Arme zu sichern vermag.

9. Vorrichtung nach einem der vorangehenden Ansprüche, **dadurch gekennzeichnet, daß** die Aufnahmen zweiteilig ausgebildet sind und einen Befestigungsteil und einen Führungsteil aufweisen.

10. Vorrichtung nach einem der vorangehenden Ansprüche, **dadurch gekennzeichnet, daß**'die Rasteinrichtung als Rastbolzen oder dergleichen ausgebildet ist.

11. Vorrichtung nach einem der vorangehenden Ansprüche, **dadurch gekennzeichnet, daß** die Arme einen kreisförmigen, ovalen, eckigen, rechteckigen oder dergleichen Querschnitt aufweisen.

12. Vorrichtung nach einem der vorangehenden Ansprüche, **dadurch gekennzeichnet, daß** mehrere Lichtquellen miteinander koppelbar ausgebildet sind, wobei zur Koppelung der Lichtquellen Verbindungsstücke vorgesehen sein können, die wenigstens teilweise flexibel ausgebildet sein können.

13. Vorrichtung nach einem der vorangehenden Ansprüche, **dadurch gekennzeichnet, daß** die Lichtquellen auch Beleuchtungseinrichtungen im optischen Bereich, Kameras, Lagesensoren, Temperatursensoren und/oder dergleichen aufweisen.

14. Vorrichtung nach einem der vorangehenden Ansprüche, **dadurch gekennzeichnet, daß** Module vorgesehen sind, welche den UV-Lichtquellen ähnlich aufgebaut sind und Beleuchtungseinrichtungen im optischen Bereich, Kameras, Lagesensoren, Temperatursensoren und/oder dergleichen aufweisen.

15. Vorrichtung nach einem der vorangehenden Ansprüche, **dadurch gekennzeichnet, daß** die UV-Lichtquellen schalt- und/oder regelbar sind, wobei die UV-Lichtquellen getrennt schalt- und/oder regelbar sein können.
